# EUROPEAN PATENT SPECIFICATION

(11) **EP 1 486 392 B1**
(45) Date of publication and mention of the grant of the patent: **21.03.2007**
(21) Application number: 04253492.5
(22) Date of filing: 11.06.2004
(51) Int. Cl.: B61D 45/00, B60P 7/12

(54) **Safety device for securing horizontally loaded cylindrical goods**
Sicherheitsvorrichtung zum Festlegen von horizontal geladenen, zylindrischen Gütern
Dispositif de sécurité pour fixer des marchandises cylindriques chargées horizontalement

(30) Priority: 13.06.2003 GB 0313729
(43) Date of publication of application: 15.12.2004
(73) Proprietor: Railion Deutschland AG, 55116 Mainz (DE)
(72) Inventor: Ernst, Andreas, 02905 Niesky (DE); Bengs, Norbert, 02826 Görlitz (DE); Meyer, Heinrich, 32429 Minden (DE)
(74) Representative: Zinken-Sommer, Rainer

(56) References cited:
- EP-A- 0 017 599
- EP-A- 0 344 661
- US-A- 3 074 512
- US-A- 4 217 831

## Description

### Background of the invention

### Technical field of the invention

The invention relates to a safety device for securing horizontally loaded cylindrical goods having a wedge-like shape. In another embodiment, the invention relates to a safety system comprising the safety device and one or more rails for locking the safety device. Further, the invention also relates to a vehicle, in particular a freight wagon, comprising the safety system or safety device.

Long cylindrical goods such as paper rolls are transported lying in freight wagons. The cylinders can be stored parallel or transverse to the longitudinal axis of the wagon. During transport, forces and acceleration act on the cylindrical goods in transverse, vertical and longitudinal directions, caused by the vehicle dynamics. In particular, movement of the cylindrical rolls in transverse direction to the vehicle driving direction can cause dangerous situations and have to be prevented or reduced to an acceptable level.

### Description of the prior art

For that purpose, safety devices are used in various different embodiments.

In DE 299 17 373, a safety device is proposed comprising a combination of wedges and straps. The wedges can be inserted in openings in the wagon floor in transverse directions over the loaded goods. DE 297 14 344 describes a wedge mounted on an adaptor and fitted into a rail that is mounted in the wagon floor. The support side of the wedges is two-dimensional concave. A disadvantage of both prior art security devices is that the adaptation of the system to different sized loads cannot be done very accurately. Further, the positioning of the safety devices on the wagon floor allows only the securing of cylinders lying in longitudinal direction.

US 3.074.512 proposes an adjustable wedge for preventing objects from rolling on a surface comprising a two-armed lever, which is pivotally connected to a food portion of the wedge for adjusting the wedge's supporting portion and for locking it in a desired angular position relative to the foot portion. By adjusting the lever the supporting portion can be raised or lowered, changing the angle of the wedge shape. In that way the safety device is adjustable to adapt to cylindrical goods of different sizes.

### Summary of the invention

There is a need for an improved safety system for securing horizontally loaded cylindrical goods. According to the invention there is provided a safety system for securing horizontally loaded cylindrical goods in the loading space of a vehicle comprising a safety device, having a wedge-like shape with a low and an opposite high end, comprising a floor plate, one or more positioning pins (14) attached under the floor plate, a support member, rotatably connected on the floor plate at the low end of the device over a swivel axis (13) and an adjustment device (10) connecting the support member to the floor plate at the opposite high end of the device, which adjustment device (10) is length-adjustable, and comprising one or more grid rails, the grid rails comprising one or more rows of openings extending over the length of the grid rail, the openings having a shape commensurate with the shape of the positioning pins of the safety device and capable of receiving said positioning pins.
The safety system provides a flexible and a safer way of securing cylindrical goods of different sizes. The cylinders can be stored in both longitudinal and transverse direction, allowing a more optimal and flexible use of the loading space and increase of loading capacity of the vehicle. In a preferred embodiment the safety system further comprises a storage closet or storing non-used safety devices to easily make loading space available in case safety devices are not needed.

In yet another aspect, the invention relates to a vehicle, in particular a freight wagon comprising a safety system as described above and having the many advantages thereof as described above.

In one embodiment of the invention the safety device comprises a floor plate, to which two positioning pins are connected, a swivel mounted convex shaped support surface and an adjustment device.

The safety system for securing loads according to the invention provides an adjustable safety device having locking possibilities in the wagon floor and preferably also storage possibilities in case of non-use in the vehicle. The vehicle, preferably a freight wagon, is provided with one or more parallel pairs of grid rails having multiple openings, safety devices and preferably, at the head walls, storage closets accessible from inside the wagon. One pair of grid rails is preferably provided on both outer sides of the wagon floor and serve for receiving the positioning pins of the safety devices and secure in that way any transverse movements of longitudinally loaded cylinders. Further, these multiple openings can receive positioning pins of protection walls for the loaded goods. Further, a couple of grid rails are provided that are orientated longitudinally and parallel at the inside of the outer grid rail. These inner grid rails have two kinds of openings. One type of opening is identical to those in the outer grid rails and the other is turned over 90°. In this way, cylinders lying in longitudinal direction and, additionally, cylinders lying in transverse direction can be secured.

For the storage of the safety device in case of non-use, a closet is provided on the head wall that is accessible from the inside. These storage closets comprise multiple cases comprising broad bars that are connected to create mesh-like storage shelves in the wagon and have especially mounted transverse and longitudinal bars engaging the positioning pins of the safety devices.

### Brief description of the drawings,

The following is a description of an embodiment of the invention given by way of example only and with reference to the appended drawings in which:
Fig. 1 is a schematic side view of a safety device.
Fig. 2 is a schematic side view of a safety device with an alternative adjustment device.
Fig. 3 is a schematic front view of a safety device.
Fig. 4 is a schematic top view of a wagon floor fitted with grid rails.
Fig. 5 is a schematic exploded view of the grid rails of Fig 4.
Fig. 6 is a schematic view of a storage closet.

### Detailed description of the drawings and preferred embodiments of the invention

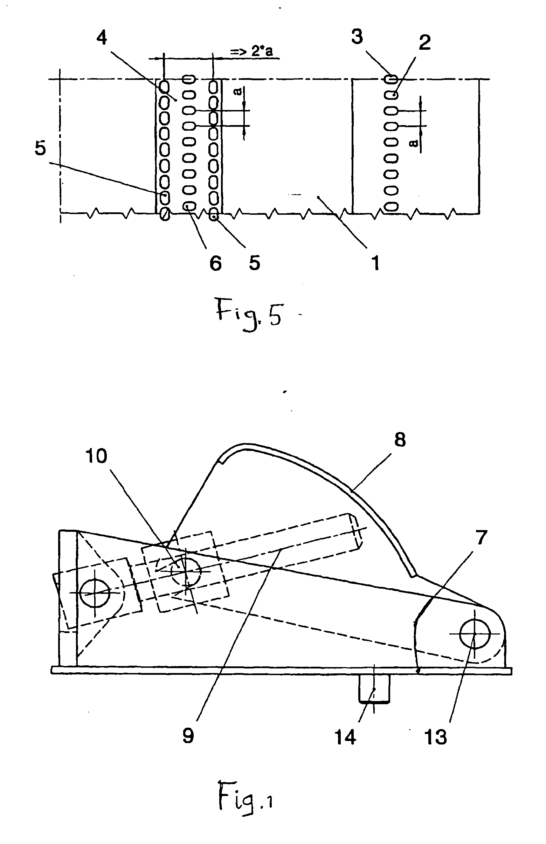

Figure 1 shows an adjustable safety device, comprising a floor plate (7), a support surface (8) that is adjustable over swivelling axis (13), a spindle and a spindle bolt. The individual joint elements are connected through rotation and translation joints. This embodiment allows a rungless adjustment of the safety device to the applicable diameter of the cylinder to be secured.

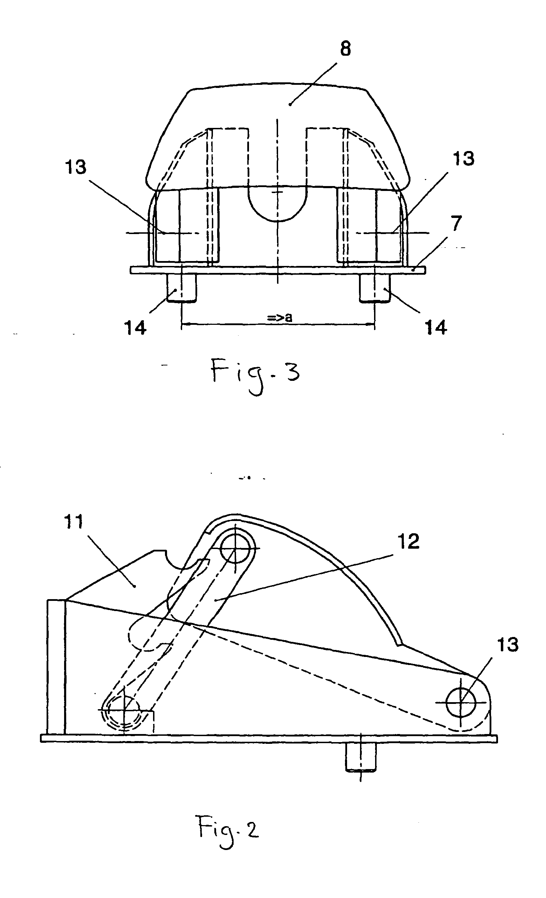

Figure 2 shows a safety device in which the spindle and the spindle bolt are replaced by a locking element having half-circle shaped recesses (11) and a lever with positioning pins (12). In this solution, the adjustment to the diameter of the cylinders to be stored in stepwise. Further the support surface (8) is preferably shaped convex curved in at least two dimensions, in which the curved plane is situated in the swivelling plane of the peg according to the invention. The support surface (8) can be curved convex in three dimensions, the additional level of curvature being relative to the first level of curvature rotated over 90°. This convex curved support surface has the advantage that damage to the cylindrical goods has the consequence of sharp edges at the contact points being prevented because the contact points are always rounded. Further, this reduces the risk of pushing and tilting out the safety devices out of the oval support openings of the grid rail as a consequence of longitudinal movements of the loaded goods.

Figure 3 shows a front view of the safety device. Under the safety device, two positioning pins (14) are mounted. The positioning pins have a mutual distance of at least 2 x "a", wherein the multiplication factor can only be an integral multiple of "a" and "a" is the distance of two oval-shaped openings in the outward positioned grid rails (2).

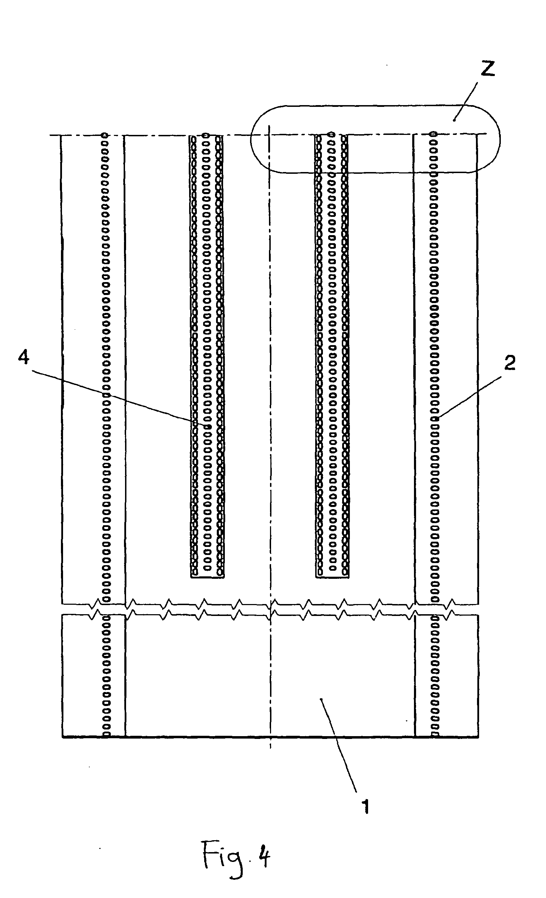

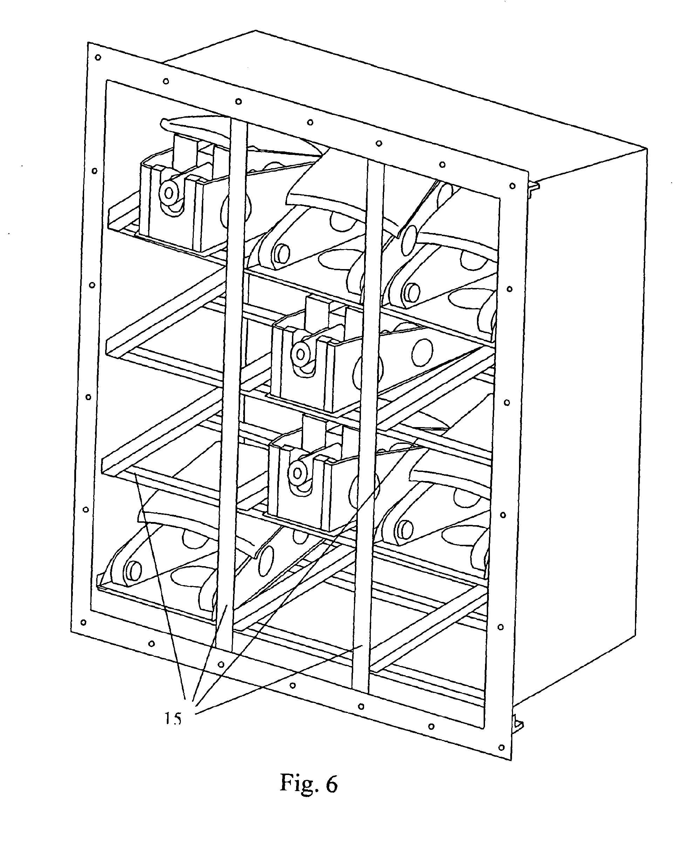

Figure 4 shows a wagon floor (1) of a freight wagon in top view. The floor is provided, at the left and right extremity, with a parallel grid rail (2) with oval openings (3). Additionally, the wagon is provided with a further parallel inner set of grid rails (4). These inner rails have at least three rows of openings, wherein the outer rows of openings (5) are turned over 90° relative to the inner row of openings and (see figure 5) have a distance of at least A (relative to each other).

Figure 6 shows the storage cupboards that are mounted on the head walls of the freight wagon between the head wall side columns and that are accessible from inside. In non-use, the safety devices are stored in the closets to not limit the available storage floor space. The storage closets have a rectangular opening facing the wagon and have a shelf-like construction. The horizontal and vertical joists (15) of the storage closet that border the wagon storage space have a broad flat surface with rounded edges, preferably shaped as a rectangle rod. This way, the risk of damaging the loaded goods by sharp edges is diminished and the rods can absorb, to a certain extent, pressure occurring in case of acceleration.

The length of the adjustment device (10) can be adapted in many different ways. One preferred way is shown in Figure 1 showing a safety device according to the invention the adjustment device (10) comprises a spindle and a spindle bolt, the spindle or spindle bolt connected to the floor plate (7) and the other to the support member (8), rotatably mounted to allow the spindle to turn and move up or down the bolt to change the length of the adjustment device.

In another embodiment the adjustment device (10) comprises two interlocking elements, one connected to floor plate (7) and the other to support member (8), one interlocking element having two or more recesses at different heights to engage and hold into a fixed position the other interlocking element.

It is important to firmly secure the safety devices in the locking positions in the floor of the loading space. In view of that the safety device according to the invention preferably has two or more positioning pins (14) positioned at the low end of the device. In another embodiment the device has 3 pins, preferably arranged in an even-sided triangle. In the safety device the one or more positioning pins (14) are preferably elongate-shaped. In that way the device cannot easily tilt out of the locking position. With elongate shape are meant for example oval, rectangular or rectangular shapes with rounded edges etc. More preferably the safety device comprises two adjacent elongate-shaped positioning pins (14), both at the low end of the safety device and having a length axis parallel to a length axis of the safety device.

In the safety device according to the invention the support member (8) preferably has a top surface that is shaped convex-curved in at least two dimensions. Although the overall wedge shape of the device is concave in the length direction thereof to adequately adapt to and support the cylinder shape, the top surface of the support member is convex in at least two dimensions to prevent damages to the loaded goods. In a two dimensionaly curved top surface the edges are preferably rounded. More preferably the surface is 3 dimensionally convex curved.

The positioning pins of the safety devices engage locking positions in the ground floor of a loading space, for example a freight wagon. The locking positions in the floor can in principle be provided in many ways. For example openings with a shape commensurate with the shape of the positioning pins can be drilled into the wagon floor. Alternatively, plates can be provided locally having such openings. However in another aspect according to the invention there is provided a safety system comprising a safety device as described aboveand one or more grid rails (4), the grid rails (4) comprising one or more rows of openings (5, 6) extending over the length of the grid rail, the openings having a shape commensurate with the shape of the positioning pins (14) of the safety device and capable of receiving said positioning pins. Preferably, in the safety system the safety device has two or more adjacent positioning pins (14), the distance between the openings (6) in the rail is "a" and the distance between the positioning pins of the safety device is one or more times "a". The system is easy to mount into a vehicle and with only a few adjustments converts the whole loading floor suitable for cylindrical goods.

In a preferred embodiment the grid rail comprises two or more rows of openings allowing a safety device to be positioned in two or more different directions, preferably parallel and perpendicular to the length axis of the grid rail. In this way cylindrical goods can be stored in the longitudinal and transverse direction of the vehicle. The pattern of openings in the rows is chosen to meet the positioning pins. Preferably, in the safety system one or more positioning pins (14) of the safety device are of elongate shape and the grid rail comprises a first row of corresponding elongate-shaped openings (5), and a further second row of elongate openings (6) with the long axis of the openings perpendicular to the long axis of the openings in the first row.

In a preferred embodiment (see Fig 5) the grid rails comprise two outer rows of elongate openings (5) at a distance between the rows of two or more times "a" and, between these outer rows, one inner row of openings (6), with the openings at a distance of "a", wherein the safety device comprises two adjacent elongate positioning pins (14) at a distance corresponding to the distance between the two outer rows in the grid rail. Preferably, the length axis of the openings in a first row is parallel, and the length axis of the openings in a second row is perpendicular to the length axis of the grid rail.

The invention relates further to a vehicle comprising a loading space comprising one or more safety devices or a safety system as described above. The vehicle can be any transport vehicle like a train a truck or even a ship, but mostly is a freight wagon. In the vehicle on the floor of the loading space, two or more grid rails are provided for securing cylindrical goods in a longitudinal and transverse direction of the vehicle.

The vehicle or the safety system according to the invention preferably further comprises a storage closet for storing safety devices positioned preferably at an end wall of the loading space. The storage closet comprises multiple cases for storing a safety device formed by bars connected to create mesh-like shelves and bars for engaging the positioning pins (14) of the safety devices to prevent them from falling out of the closet. The shelves may be tilted towards the back of the closet to further prevent that the safety devices fall out of the closet because of the vehicle accelerations. To prevent damages to the cylindrical goods the front bars facing the loading space preferably have a broad flat surface with rounded edges.

## Claims

1. Safety system comprising a safety device for securing horizontally loaded cylindrical goods, the safety device having a wedge-like shape with a low and an opposite high end, comprising
■ a floor plate (7),
■ one or more positioning pins (14) attached under the floor plate (7),
■ a support member (8), rotatably connected on the floor plate (7) at the low end of the device over a swivel axis (13) and
■ an adjustment device (10) connecting the support member (8) to the floor plate (7) at the opposite high end of the device, which adjustment device (10) is length-adjustable,
**characterized by** one or more grid rails (4), the grid rails (4) comprising one or more rows of openings (5, 6) extending over the length of the grid rail, the openings having a shape commensurate with the shape of the positioning pins (14) of the safety device and capable of receiving said positioning pins.

2. Safety system according to claim 1, wherein the adjustment device (10) of the safety device comprises a spindle and a spindle bolt, the spindle or spindle bolt connected to the floor plate (7) and the other to the support member (8), rotatably mounted to allow the spindle to turn and move up or down the bolt to change the length of the adjustment device.

3. Safety system according to claims 1 or 2, wherein one or more positioning pins (14) of the safety device are elongate-shaped.

4. Safety system according to claims 1 to 3, wherein the safety device comprises two elongate-shaped positioning pins (14), both at the low end of the device and having a length axis parallel to a length axis of the safety device.

5. Safety system according to claims 1 to 4, wherein the safety device has two or more adjacent positioning pins (14), the distance between the openings (6) in the rail is "a" and the distance between the positioning pins of the safety device is one or more times "a".

6. Safety system according to claims 1 to 5, wherein the grid rail comprises two or more rows of openings allowing a safety device to be positioned in two or more different directions, preferably parallel and perpendicular to the length axis of the grid rail.

7. Safety system according to claim 6, wherein one or more positioning pins (14) of the safety device are of elongate shape and wherein a grid rail comprises a first row of corresponding elongate-shaped openings (5), and a further second row of elongate openings (6) with the long axis of the openings perpendicular to the long axis of the openings in the first row.

8. Safety system according to claims 5, 6 or 7, wherein the grid rails comprise two outer rows of elongate openings (5) at a distance between the rows of two or more times "a" and, between these outer rows, one inner row of openings (6), with the openings at a distance of "a", wherein the safety device comprises two adjacent elongate positioning pins (14) at a distance corresponding to the distance between the two outer rows in the grid rail.

9. Safety system according to claims 6 to 8, wherein the length axis of the openings in a first row is parallel, and the length axis of the openings in a second row is perpendicular to the length axis of the grid rail.

10. A vehicle comprising a loading space comprising a safety system according to claims 1 to 9 and further comprising, preferably at an end wall of the loading space, a storage closet for storing the safety devices.

11. Vehicle according to claim 10, wherein the storage closet comprises multiple cases for storing a safety device formed by bars connected to create mesh-like shelves and bars for engaging the positioning pins (14) of the safety devices according to any one of claims 1 to 8 to prevent them from falling out of the closet.

12. Vehicle according to claim 11, wherein the front bars facing the loading space have a broad flat surface with rounded edges.

## Patentansprüche

1. Sicherheitssystem, das eine Sicherheitsvorrichtung zum Sichern von horizontal geladenen zylindrischen Gütern umfasst, wobei die Sicherheitsvorrichtung eine Keilform hat und ein niederes und ein gegenüberliegendes höheres Ende aufweist, umfassend:
- eine Bodenplatte (7),
- einen oder mehrere Positionierungsstifte (14), die unter der Bodenplatte (7) angebracht sind,
- ein Stützelement (8), das drehbar auf der Bodenplatte (7) am niederen Ende der Vorrichtung über einer Schwenkachse (13) angebracht ist, und
- eine Verstellvorrichtung (10), die das Stützelement (8) mit der Bodenplatte (7) am gegenüberliegenden höheren Ende der Vorrichtung verbindet, wobei die Verstellvorrichtung (10) längenverstellbar ist,
**gekennzeichnet durch** eine oder mehrere Gitterschienen (4), wobei die Gitterschienen (4) eine oder mehrere Reihen von Öffnungen (5, 6) umfassen, die sich über die Länge der Gitterschiene erstrecken, wobei die Öffnungen eine Form haben, die der Form der Positionierungsstifte (14) der Sicherheitsvorrichtung entspricht, und in der Lage sind, die Positionierungsstifte aufzunehmen.

2. Sicherheitssystem nach Anspruch 1, wobei die Verstellvorrichtung (10) der Sicherheitsvorrichtung eine Spindel und einen Spindelbolzen umfasst, wobei die Spindel oder der Spindelbolzen mit der Bodenplatte (7) und das andere mit dem Stützelement (8) verbunden ist, die drehbar montiert sind, damit sich die Spindel drehen und den Bolzen auf und ab bewegen kann, um die Länge der Verstellvorrichtung zu verändern.

3. Sicherheitssystem nach Anspruch 1 oder 2, wobei ein oder mehrere Positionierungsstifte (14) der Sicherheitsvorrichtung länglich geformt sind.

4. Sicherheitssystem nach den Ansprüchen 1 bis 3, wobei die Sicherheitsvorrichtung zwei länglich geformte Positionierungsstifte (14) umfasst, die sich beide am niederen Ende der Vorrichtung befinden und eine Längsachse aufweisen, die parallel zu einer Längsachse der Sicherheitsvorrichtung verläuft.

5. Sicherheitssystem nach den Ansprüchen 1 bis 4, wobei die Sicherheitsvorrichtung zwei oder mehr Positionierungsstifte (14) aufweist, der Abstand zwischen den Öffnungen (6) in der Schiene gleich "a" ist und der Abstand zwischen den Positionierungsstiften der Sicherheitsvorrichtung gleich "a" oder einem Mehrfachen von "a" ist.

6. Sicherheitssystem nach den Ansprüchen 1 bis 5, wobei die Gitterschiene zwei oder mehr Reihen von Öffnungen umfasst, wodurch eine Sicherheitsvorrichtung in zwei oder mehr unterschiedlichen Richtungen positioniert werden kann, vorzugsweise parallel oder senkrecht zur Längsachse der Gitterschiene.

7. Sicherheitssystem nach Anspruch 6, wobei ein oder mehrere Positionierungsstifte (14) der Sicherheitsvorrichtung eine längliche Form haben und wobei die Gitterschiene eine erste Reihe entsprechender länglich geformter Öffnungen (5) und eine weitere, zweite Reihe von länglichen Öffnungen (6) umfasst, wobei die Längsachse der Öffnungen senkrecht zur Längsachse der Öffnungen in der ersten Reihe verläuft.

8. Sicherheitssystem nach Anspruch 5, 6 oder 7, wobei die Gitterschienen zwei äußere Reihen länglicher Öffnungen (5) in einem Abstand zwischen den Reihen vom Zwei- oder Mehrfachen von "a" und - zwischen diesen äußeren Reihen - eine innere Reihe von Öffnungen (6), wobei die Öffnungen einen Abstand von "a" haben, umfassen, wobei die Sicherheitsvorrichtung zwei benachbarte längliche Positionierungsstifte (14) in einem Abstand, der dem Abstand zwischen den zwei äußeren Reihen in der Gitterschiene entspricht, umfasst.

9. Sicherheitssystem nach den Ansprüchen 6 bis 8, wobei die Längsachse der Öffnungen in der ersten Reihe parallel zur Längsachse der Gitterschiene verläuft und die Längsachse der Öffnungen in einer zweiten Reihe senkrecht zur Längsachse der Gitterschiene verläuft.

10. Fahrzeug mit einem Laderaum, der ein Sicherheitssystem nach den Ansprüchen 1 bis 9 umfasst und des Weiteren - vorzugsweise an einer Endwand des Laderaumes - einen Aufbewahrungsschrank zum Aufbewahren der Sicherheitsvorrichtungen aufweist.

11. Fahrzeug nach Anspruch 10, wobei der Aufbewahrungsschrank mehrere Fächer zum Aufbewahren einer Sicherheitsvorrichtung umfasst, wobei die Fächer durch Stangen, die zu gitternetzartigen Ablageflächen verbunden sind, und Stangen, welche die Positionierungsstifte (14) der Sicherheitsvorrichtungen nach einem der Ansprüche 1 bis 8 in Eingriff nehmen, gebildet werden, um zu verhindern, dass diese aus dem Schrank herausfallen.

12. Fahrzeug nach Anspruch 11, wobei die vorderen Stangen, die dem Laderaum zugewandt sind, eine breite flache Oberfläche mit gerundeten Kanten aufweisen.

## Revendications

1. Système de sécurité comprenant un dispositif de sécurité pour immobiliser des marchandises cylindriques chargées horizontalement, le dispositif de sécurité ayant une forme de coin avec un côté bas et un côté opposé haut, comprenant
- une plaque de base (7),
- un ou plusieurs tétons de positionnement (14) fixés sous la plaque de base (7),
- un élément support (8) relié de manière pivotante à la plaque de base (7), à l'extrémité basse du dispositif, au moyen d'un axe de pivotement (13) et
- un dispositif de réglage (10) reliant l'élément support (8) à la plaque de base (7) sur le côté opposé haut du dispositif, ce dispositif de réglage (10) étant réglable en longueur,
**caractérisé par** un ou plusieurs rails à grille (4), les rails à grille (4) comportant une ou plusieurs rangées d'ouvertures (5, 6) s'étendant sur la longueur du rail à grille, les ouvertures ayant une forme correspondant à la forme des tétons de positionnement (14) du dispositif de sécurité et pouvant recevoir lesdits tétons de positionnement.

2. Système de sécurité selon la revendication 1, dans lequel le dispositif de réglage (10) du dispositif de sécurité comprend un axe et un boulon, l'axe ou le boulon étant relié à la plaque de base (7) et l'autre étant relié à l'élément support (8), monté de manière tournante afin de permettre à l'axe de tourner et de faire monter ou descendre le boulon afin de modifier la longueur du dispositif de réglage.

3. Système de sécurité selon la revendication 1 ou 2, dans lequel le ou les plusieurs tétons de positionnement (14) du dispositif de sécurité ont une forme allongée.

4. Système de sécurité selon les revendications 1 à 3, dans lequel le dispositif de sécurité comporte deux tétons de positionnement (14) de forme allongée, les deux se trouvant à l'extrémité basse du dispositif, et dont un axe longitudinal est parallèle à l'axe longitudinal du dispositif de sécurité.

5. Système de sécurité selon les revendications 1 à 4, dans lequel le dispositif de sécurité comporte deux ou plus de tétons de positionnement (14) adjacents, la distance entre les ouvertures (6) dans le rail étant de « a » et la distance entre les tétons de positionnement du dispositif de sécurité étant égale à une ou plusieurs fois « a ».

6. Système de sécurité selon les revendications 1 à 5, dans lequel le rail à grille comporte deux ou plus d'ouvertures permettant le positionnement du dispositif de sécurité dans deux ou plus de directions différentes, de préférence parallèles et perpendiculaires à l'axe longitudinal du rail à grille.

7. Système de sécurité selon la revendication 6, dans lequel un ou plusieurs tétons de positionnement (14) du dispositif de sécurité ont une forme allongée et dans lequel un rail à grille comporte une première rangée d'ouvertures (5) de forme correspondante allongée et une autre seconde rangée d'ouvertures (6) allongées, dont l'axe longitudinal des ouvertures est perpendiculaire à l'axe longitudinal des ouvertures de la première rangée

8. Système de sécurité selon la revendication 5, 6 ou 7, dans lequel le rail à grille comporte deux rangées extérieures d'ouvertures allongées (5) avec une distance entre les rangées égale à deux ou plusieurs fois « a » et, entre ces rangées extérieures, une rangée intérieure d'ouvertures (6) dont les ouvertures sont à une distance égale à « a », le dispositif de sécurité comportant deux tétons de positionnement (14) adjacents de forme allongée, à une distance correspondant à la distance entre les deux rangées extérieures dans le rail à grille.

9. Système de sécurité selon les revendications 6 à 8, dans lequel l'axe longitudinal des ouvertures dans une première rangée est parallèle, et l'axe longitudinal des ouvertures dans une deuxième rangée est perpendiculaire à l'axe longitudinal du rail à grille.

10. Véhicule comportant un espace de chargement comportant un système de sécurité selon les revendications 1 à 9, et comportant en outre, de préférence sur une paroi d'extrémité de l'espace de chargement, une armoire de rangement pour ranger les dispositifs de sécurité.

11. Véhicule selon la revendication 10, dans lequel l'armoire de rangement comporte des emplacements multiples pour le rangement d'un dispositif de sécurité, formés par des barres reliées entre elles pour créer des étagères en forme de grille, et des barres servant à immobiliser les tétons de positionnement (14) des dispositifs de sécurité selon l'une des revendications 1 à 8, afin d'éviter qu'ils ne tombent hors de l'armoire.

12. Véhicule selon la revendication 11, dans lequel les barres avant faisant face à l'espace de chargement ont une large surface plate avec des angles arrondis.
